# EUROPEAN PATENT APPLICATION

(11) **EP 2 497 751 A1**
(43) Date of publication of application: **12.09.2012**
(21) Application number: 11191157.4
(22) Date of filing: 29.11.2011
(51) Int. Cl.: C02F 1/28, C02F 1/00, B01J 20/06, B01J 20/10, B01J 20/20, B01J 20/28, B01J 20/32

(54) **Water purifying filter including an organic material adsorbent and water purifying system including the same**

(30) Priority: 07.03.2011 KR 20110019815
(71) Applicant: Samsung Electronics Co., Ltd., Gyeonggi-Do 442-742 (KR)
(72) Inventor: Yang, Ho Jung, Gyeonggi-do (KR); Kang, Hyo Rang, Gyeonggi-do (KR); Lee, Joo Wook, Seoul (KR); Kim, Hyun Seok, Seoul (KR); Kim, Chang Hyun, Seoul (KR); Kim, Jae Eun, Seoul (KR)
(74) Representative: Zijlstra, Robert Wiebo Johan

(57) **Abstract**

A water purifying filter may include an organic material adsorbent. The organic material adsorbent may include graphite with an interplanar spacing at the c-axis of about 0.3354 nm to 0.34 nm as measured by X-ray diffraction analysis (CuKα). A water purifying system may include the water purifying filter.

## Description

### BACKGROUND

This disclosure relates to an organic material adsorbent, and a water purifying filter and a water purifying system including the same.

The demand for a household water purifier has been continuously increasing due to an increase in the interest in health and the distrust of tap water. A conventional household water purifier consists of four-stage filters including a sedimentation filter, a pre-carbon filter, a membrane (RO or MF/UF) filter, and a post-carbon filter. The sedimentation filter performs a function of removing floating material of about 5 µm or more, and the pre-carbon filter removes chlorine and various organic materials. The membrane filter performs a function of removing heavy metals and microorganisms, while the post-carbon filter controls taste and odor.

To improve sanitary conditions of tap water, laws have been passed to limit the residual chlorine in tap water to an amount of about 2 ppm or less. The chlorine changes into the form of HCIO or CIO- through a reaction as represented by the following Reaction Scheme 1 to act as an oxidizing agent. It is known that if the oxidizing agent comes in contact with carbon, it oxidizes the carbon and causes a decrease in the weight. As result, the oxidation reaction changes the structure of the carbon, and causes relatively serious deterioration in the chlorine and organic material adsorption performance of the pre-carbon filter.

[Reaction Scheme 1] Cl₂ + H₂O → HClO + H⁺ + Cl⁻ C + ClO⁻ → 2Cl⁻ + CO₂

In general, activated carbon is used in the pre-carbon filter and the post-carbon filter. When the activated carbon used in the pre-carbon filter and the post-carbon filter are exposed to chlorine, as the result of the reaction in Reaction Scheme 1, the weight of the activated carbon decreases between 0% to 47% of its original weight at about 100,000 ppm · Hr. Thus, the pre-carbon filter and the post-carbon filter may need to be replaced about every 6 months to 12 months.

### SUMMARY

Various example embodiments relate to an organic material adsorbent with desirable adsorption performance and durability, e.g., anti-oxidation properties.

Various example embodiments relate to a water purifying filter including the organic material adsorbent.

Various example embodiments relate to a water purifying system including the water purifying filter.

According to an example embodiment, an organic material adsorbent may include a graphite having a structure formed of carbon atoms organized in planes and a c-axis perpendicular to the planes, an interplanar spacing between adjacent planes at the c-axis being about 0.3354 nm to 0.34 nm as measured by X-ray diffraction analysis (CuKα).

The graphite may have a specific surface area of about 100 m²/g to about 900 m²/g.

The graphite may include pores having an average diameter of about 0.1 nm to about 10 nm.

The graphite may have porosity of about 0.05 cm³/g to about 1 cm³/g.

The organic material adsorbent may further include a coating layer that is positioned on the surface of the graphite. The coating layer may include an anti-oxidant material.

The anti-oxidant material may include an oxide of a Group 4 element, an oxide of a Group 8 element, an oxide of a Group 13 element, an oxide of a Group 14 element, a carbide of a Group 4 element, a carbide of a Group 6 element, zeolite, or a combination thereof. Specifically, the anti-oxidant material may include TiO₂, Fe₂O₃, Al₂O₃, SiO₂, WC, TiC, or a combination thereof.

The coating layer including the anti-oxidant material may be positioned partially or wholly on the surface of the graphite. For example, the coating layer may cover all of the exterior and interior porous surfaces of the graphite.

The organic material adsorbent may include the anti-oxidant material in the amount of about 1 wt% to 30 wt%, based on the total weight of the organic material adsorbent.

Another example embodiment may include a water purifying filter including the organic material adsorbent.

Another example embodiment may include a water purifying system including the water purifying filter.

Details of the other non-limiting embodiments are included in the following detailed description.

### BRIEF DESCRIPTION OF THE DRAWINGS

FIG. 1 is a schematic diagram of an organic material adsorbent according to an example embodiment.
FIG. 2 is a schematic diagram of a water purifying system according to an example embodiment.
FIG. 3 and FIG. 4 are scanning electron microscope/energy dispersive spectroscopy (FE-SEM/EDS) photographs of the organic material adsorbent prepared in Example 2.
FIG. 5 is a thermogravimetric analysis (TGA) graph of the organic material adsorbent prepared in Example 2.
FIG. 6 is a graph showing the weight change of the organic material adsorbents of Example 1, Example 2, Comparative Example 1, and Comparative Example 2 after acid treatment compared to their initial weight.
FIG. 7 is a graph showing the CHCl₃ adsorption amounts of the organic material adsorbents of Example 1, Example 2, and Comparative Example 3.

### DETAILED DESCRIPTION

The present disclosure will be described more fully hereinafter in the following detailed description of the disclosure, in which some but not all embodiments are described. It should be understood that this disclosure may be embodied in many different forms and should not be construed as limited to the various embodiments set forth herein.

In the drawings, the thickness of various layers, films, panels, regions, etc., may have been exaggerated for clarity. It will be understood that when an element or layer is referred to as being "on," "connected to," "coupled to," or "covering" another element or layer, it may be directly on, connected to, coupled to, or covering the other element or layer or intervening elements or layers may be present. In contrast, when an element is referred to as being "directly on," "directly connected to," or "directly coupled to" another element or layer, there are no intervening elements or layers present. Like numbers refer to like elements throughout the specification. As used herein, the term "and/or" includes any and all combinations of one or more of the associated listed items.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, e.g., "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," "an," and "the" are intended to include the plural forms as well, unless the context clearly indicates otherwise. It will be further understood that the terms, "comprises," "comprising," "includes," and/or "including," if used herein, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the shapes of regions illustrated herein but are to include deviations in shapes that result, for example, from manufacturing.

Unless otherwise defined, all terms (including technical and scientific terms) used herein have the same meaning as commonly understood by one of ordinary skill in the art. It will be further understood that terms, including those defined in commonly used dictionaries, should be interpreted as having a meaning that is consistent with their meaning in the context of the relevant art and will not be interpreted in an idealized or overly formal sense unless expressly so defined herein.

According to an example embodiment, an organic material adsorbent may include graphite. Internally, graphite has a layered, planar structure, although the exterior of the graphite as a whole may appear in granular or particulate form. In each layer of the graphite, the carbon atoms are arranged in a hexagonal lattice. A c-axis of the graphite is perpendicular to the layers of the graphite, and the layers may be parallel to each other. A distance between the adjacent layers of the graphite may be referred to as an interplanar spacing. According to an example embodiment, an interplanar spacing of the layers at the c-axis may be about 0.3354 nm to 0.34 nm as measured by X-ray diffraction analysis (CuKα).

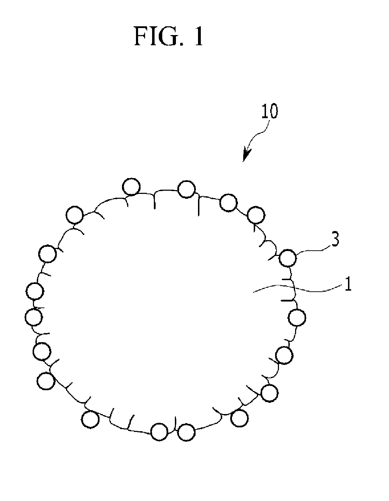

Hereinafter, an organic material adsorbent according to an example embodiment will be explained with reference to FIG. 1.

FIG. 1 is a schematic diagram of an organic material adsorbent according to an example embodiment.

Referring to FIG. 1, the organic material adsorbent 10 includes graphite 1 and a coating layer 3. Although FIG. 1 shows that the organic material adsorbent 10 includes the coating layer 3, it should be understood that the coating layer 3 may be omitted. Furthermore, although FIG. 1 shows that the particles of the coating layer 3 cover only a part of the surface of the graphite 1, it should be understood that the coating layer 3 may cover the whole surface of the graphite 1.

The graphite 1 may have an interplanar spacing at the c-axis of about 0.3354 nm to about 0.34 nm as measured by X-ray diffraction analysis (CuKα). When the graphite 1 has an interplanar spacing at the c-axis within the above range, the crystallinity of the graphite 1 may be desirably maintained, and oxidation of the carbon included in the graphite 1 by HClO or ClO⁻ existing in water may be prevented or decreased. Thereby, the organic material adsorbent 10 including the graphite 1 may have a desirable level of durability, specifically anti-oxidation durability, and thus an improved life-span. The organic material adsorbent 10 may be semi-permanently used without replacement. Furthermore, the organic material adsorbent 10 including the graphite 1 may have improved chlorine and organic material adsorption performance.

Specifically, the organic material adsorbed by the adsorbent 10 may include trihalomethane, a precursor of trihalomethane, an anionic surfactant, a phenol-based compound, an alkyl benzene sulfonate (ABS)-based compound, an organic phosphoric-based compound, a carbamate-based compound, an organic chlorine-based compound, volatile organic compounds (VOCs), polynuclear aromatic hydrocarbons, or a combination thereof. More specifically, the organic material may include chloroform, although example embodiments are not limited thereto.

The graphite 1 may have a specific surface area of about 100 m²/g to about 900 m²/g. When the graphite 1 has a specific surface area within the above range, the area that may adsorb chlorine and an organic material is enlarged, thus effectively improving adsorption performance of chlorine and an organic material. Specifically, the graphite 1 may have a specific surface area of about 200 m²/g to about 600 m²/g, although example embodiments are not limited thereto.

The graphite may include pores having an average diameter of about 0.1 nm to about 10 nm. When the average diameter of the pores included in the graphite is within the above range, chlorine and an organic material may be effectively adsorbed. Specifically, the pores may have an average diameter of about 0.5 nm to about 6 nm, although example embodiments are not limited thereto.

The graphite may have a porosity of about 0.05 cm³/g to about 1 cm³/g. The porosity may be measured using BET measuring equipment. When the porosity of the graphite is within the above range, the graphite may have an increased amount of chlorine and organic material adsorption sites while maintaining a relatively stable structure. Specifically, the graphite may have porosity of about 0.1 cm³/g to about 0.7 cm³/g, although example embodiments are not limited thereto.

The coating layer 3 positioned on the surface of the graphite 1 may include an anti-oxidant material. The anti-oxidant material included in the coating layer 3 may have a stronger durability or resistance to an oxidizing agent (such as HClO and ClO⁻) than the graphite 1.

When the organic material adsorbent 10 further includes the coating layer 3, the durability or resistance to an oxidizing agent may be effectively improved. Thus, the life-span characteristic of the organic material adsorbent 10 may be improved.

The anti-oxidant material may include an oxide of a Group 4 element, an oxide of a Group 8 element, an oxide of a Group 13 element, an oxide of a Group 14 element, a carbide of a Group 4 element, a carbide of a Group 6 element, zeolite, or combinations thereof, but is not limited thereto.

Specifically, the anti-oxidant material may include TiO₂, Fe₂O₃, Al₂O₃, SiO₂, WC, TiC, or combinations thereof, but is not limited thereto.

The organic material adsorbent 10 may include the anti-oxidant material in an amount of about 1 wt% to about 30 wt%, based on the total weight of the organic material adsorbent 10. When the amount of the anti-oxidant material is within the above range, the durability of the organic material adsorbent 10 may be increased and adsorption performance may be effectively improved. Specifically, the organic material adsorbent 10 may include the anti-oxidant material in an amount of about 5 wt% to about 10 wt%, based on the total weight of the organic material adsorbent 10, although example embodiments are not limited thereto.

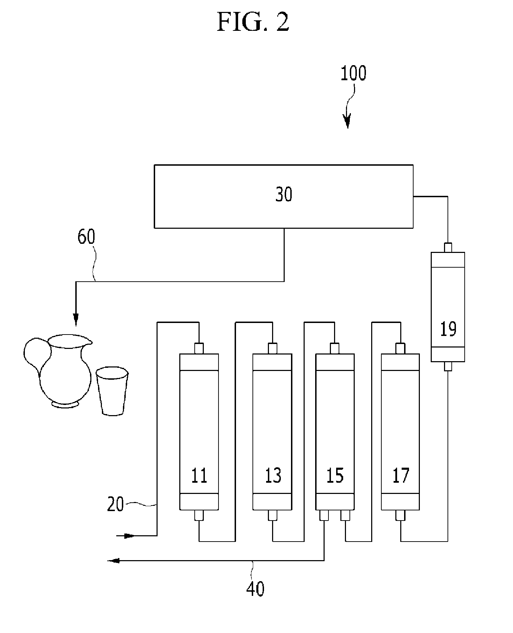

Hereinafter, a water purifying filter including the organic material adsorbent and a water purifying system including the water purifying filter according to an example embodiment will be explained with reference to FIG. 2.

FIG. 2 is a schematic diagram of a water purifying system according to an example embodiment.

Referring to FIG. 2, the water purifying system 100 includes a sedimentation filter 11, a pre-carbon filter 13 connected to the sedimentation filter 11, a membrane filter 15 connected to the pre-carbon filter 13, a post-carbon filter 17 connected to the membrane filter 15, a UV sterilizer 19 connected to the post-carbon filter 17, and a purified water bath 30 connected to the UV sterilizer 19.

The purification water inlet 20 is connected to the sedimentation filter 11. A waste water flow path 40 discharging waste water after purification is connected to the membrane filter 15. A purified water flow path 60 discharging purified water is connected to the purified water bath 30.

The sedimentation filter 11 may perform a function of filtering floating material, specifically floating material of about 5 µm or more, from the water. In general, the sedimentation filter 11 may be composed of a polymer such as high density polypropylene, etc., but is not limited thereto.

The pre-carbon filter 13 may perform a function of removing chlorine and organic material from the water. As the pre-carbon filter 13, a water purifying filter including the organic material adsorbent 10 (FIG. 1) may be used. The organic material may be as explained above, unless otherwise explained hereinafter.

When a water purifying filter including the organic material adsorbent 10 is used as the pre-carbon filter 13, the durability of the pre-carbon filter 13 and its life-span characteristic may be improved. The chlorine and organic material adsorption and removal characteristics may also be improved.

The membrane filter 15 may perform a function of removing heavy metals and microorganisms in water. In general, the membrane filter 15 may include a reverse osmosis membrane (RO), a microfiltration membrane (MF), an ultrafiltration membrane (UF), or a combination thereof, but is not limited thereto.

The post-carbon filter 17 may perform a function of controlling the taste and odor of the water. In general, the post-carbon filter 17 may be composed of activated carbon, but is not limited thereto.

The UV sterilizer 19 may perform a function of removing the bacteria in the water. In general, the UV sterilizer 19 may be composed of an UV lamp, but is not limited thereto.

Since the water purifying system 100 may use a water purifying filter including the organic material adsorbent 10 as a pre-carbon filter 13 without replacement, it may exhibit economic efficiency and environmental affinity. The water purifying system 100 may effectively remove chlorine, organic material, etc., and thus supply purified water that may be safely consumed.

### Examples

Hereinafter, various embodiments are illustrated in more detail with reference to the following examples. However, it should be understood that the following are merely example embodiments and are not to be construed as limiting to the present disclosure.

### Example 1

Graphite HSAG (product from Timcal Company) is used as an organic material adsorbent.

### Example 2

The graphite HSAG of Example 1 is dried overnight to obtain about 10 g of graphite HSAG.

About 10 ml of titanium butoxide is introduced into about 400 ml of anhydrous ethanol. The titanium butoxide and anhydrous ethanol are mixed to prepare a mixed solution.

About 10 g of the dried graphite HSAG is impregnated with the mixed solution, sealed with parafilm, and then agitated for about 24 hours while being impregnated.

Subsequently, a washing is performed with anhydrous ethanol to remove the remaining titanium butoxide that is not coated on the graphite HSAG.

Subsequently, a heat treatment is performed at about 150°C for about 1 hour. Drying is then allowed to occur at about 80°C overnight.

Thereby, an organic material adsorbent including TiO₂ coated graphite HSAG is produced.

### Comparative Example 1

Activated carbon CH900 (product from Kuraray Co. Ltd.) is used as an organic material adsorbent.

### Comparative Example 2

Commercial activated carbon PC (product from Osaka gas Co. Ltd.) for water treatment is used as an organic material adsorbent.

### Comparative Example 3

Commercial graphite MCMB (product from Osaka gas Co. Ltd.) is used as an organic material adsorbent.

### Experimental Example 1: scanning electron microscopy/energy dispersive spectroscopy (SEM/EDS)

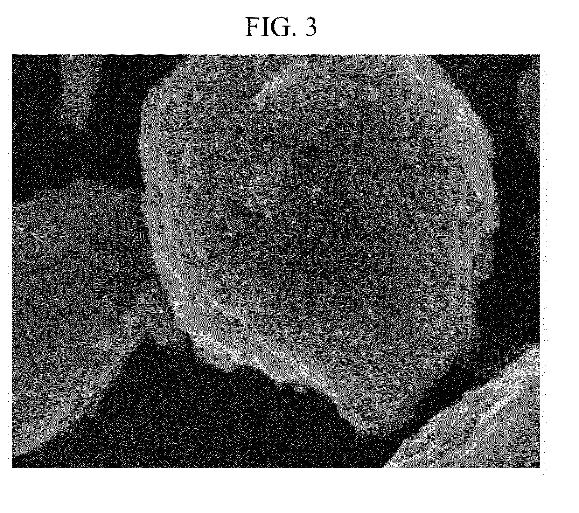

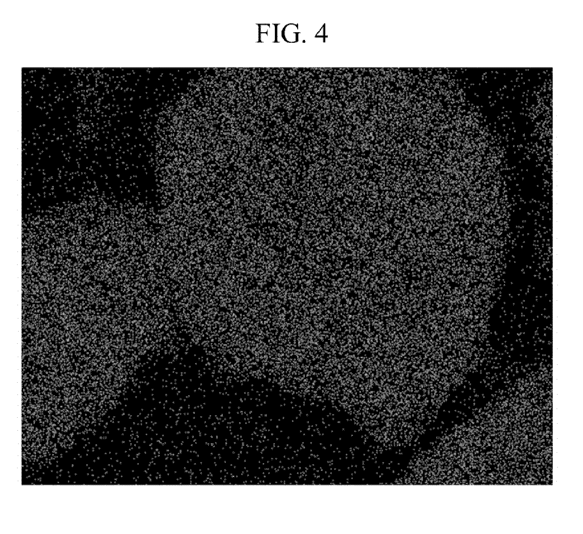

The organic material adsorbent prepared in Example 2 is photographed using FE-SEM/EDS (S-5500, Hitachi Company product) equipment. The results are shown in FIG. 3 and FIG. 4.

As shown in FIG. 3 and FIG. 4, it is confirmed that the organic material adsorbent prepared in Example 2 includes graphite HSAG coated with TiO₂ particles on the surface.

### Experimental Example 2: TGA analysis (measurement of the content of anti-oxidant material)

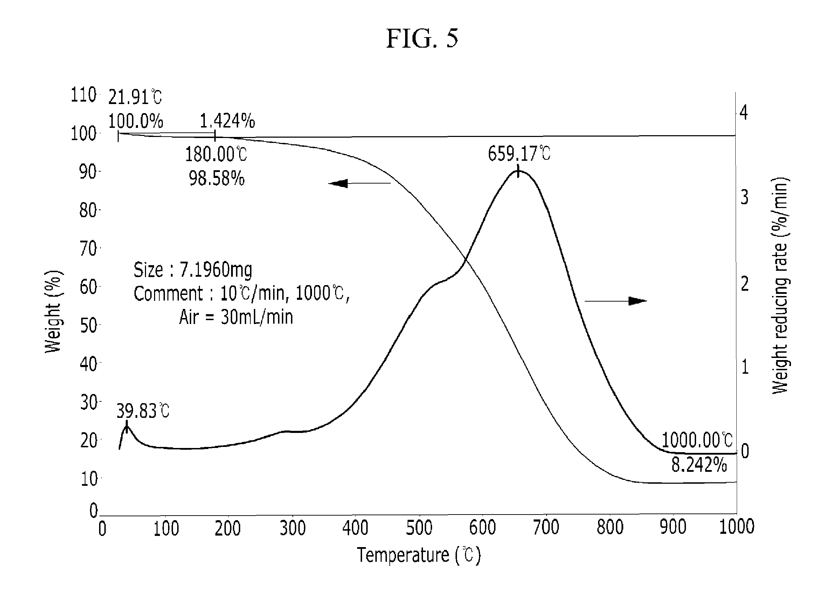

The organic material adsorbent prepared in Example 2 is subjected to thermogravimetric analysis (TGA) at a temperature elevating rate of about 10°C/min using Q5000IR (TA instruments Company product) equipment. The results are shown in FIG. 5.

As shown in FIG. 5, it is confirmed that the organic material adsorbent prepared in Example 2 includes about 8.2 wt% of Ti, based on the total weight of the organic material adsorbent. If converted on the basis of the above, it is confirmed that the organic material adsorbent prepared in Example 2 includes about 8 wt% of TiO₂, based on the total weight of the organic material adsorbent.

### Experimental Example 3: Measurement of specific surface area, pore size, and porosity

For the organic material adsorbents of Example 1, Example 2, and Comparative Examples 1 to 3, the specific surface area, the size of pores formed in the organic material adsorbent, and the porosity of the organic material adsorbent are measured using Tristar 3000 (Micromeritics Company product) equipment. The results are described in the following Table 1.

### Experimental Example 4: X-ray diffraction analysis

For the organic material adsorbents of Example 1, Example 2, and Comparative Example 1 to 3, X-ray diffraction analysis is performed. In the X-ray diffraction analysis, a Cu-Kα ray is used as a light source. Each interplanar spacing at the c-axis of the organic material adsorbents of Example 1, Example 2, and Comparative Example 1 to 3 is measured through X-ray diffraction analysis. The results are described in the following Table 1.

**(Table 1)**

| | Specific surface area (m²/g) | Pore size (nm) | Porosity (cm³/g) | Interplanar spacing at c-axis (nm) |
|---|---|---|---|---|
| Example 1 | 302 | 6 | 0.46 | 0.336 |
| Example 2 | 181 | 7 | 0.30 | 0.336 |
| Comparative Example 1 | 1393 | 0.2 | 0.74 | - |
| Comparative Example 2 | 1518 | 0.2 | 0.73 | - |
| Comparative Example 3 | 1 | - | 0.03 | - |

As shown in the Table 1, it is confirmed that the organic material adsorbents of Example 1 and Example 2 include graphite with interplanar spacing at the c-axis of about 0.336 nm as measured by X-ray diffraction analysis (CuKα). However, since the interplanar spacings at the c-axis of the organic material adsorbents of Comparative Example 1, Comparative Example 2, and Comparative Example 3 may not be measured by X-ray diffraction analysis (CuKα), the crystallinity may not be confirmed.

As result, it is expected that the organic material adsorbents of the Example 1 and Example 2 may have much better durability and thus much better life-span characteristics than the organic material adsorbents of Comparative Example 1, Comparative Example 2, and Comparative Example 3, since they include graphite that may maintain a desirable level of crystallinity.

### Experimental Example 5: Evaluation of anti-oxidation

For the organic material adsorbents of Example 1, Example 2, and Comparative Examples 1 to 3, anti-oxidation characteristics are evaluated as follows.

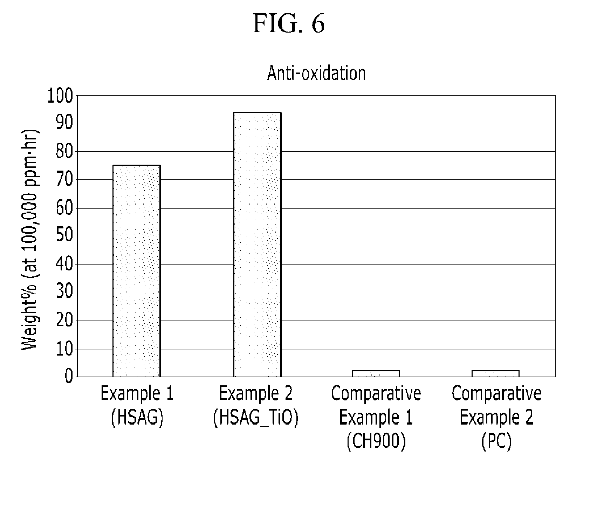

About 0.2 g of each organic material adsorbent is mixed with about 100 ml of a NaOCl aqueous solution of about 4% concentration. Subsequently, the mixture is subjected to an ultrasonic wave treatment for about 20 minutes, and is then agitated for about 2 hours 30 minutes. Subsequently, the mixture is filtered and washed, and then dried, and the weight of each organic material adsorbent is measured. The results of Example 1, Example 2, Comparative Example 1, and Comparative Example 2 are shown in FIG. 6.

As shown in FIG. 6, it is confirmed that about 70 wt% or more of the organic material adsorbents of Example 1 and Example 2 remain even after acid treatment, while less than about 3 wt% of the organic material adsorbents of Comparative Examples 1 and 2 remain after acid treatment. Thereby, it is confirmed that the organic material adsorbents of Example 1 and Example 2 may effectively adsorb and remove chlorine and organic material, because carbon is not significantly lost even if water including an oxidizing agent is purified for a relatively long time. Thus, the organic material adsorbents of Example 1 and Example 2 have better life-span characteristics than the organic material adsorbents of Comparative Examples 1 and 2.

### Experimental Example 6: Evaluation of an organic material (CHCl₃) adsorption performance

For the organic material adsorbents of Example 1, Example 2, and Comparative Example 1 to 3, organic material (chloroform, CHCl₃) adsorption performance is evaluated as follows.

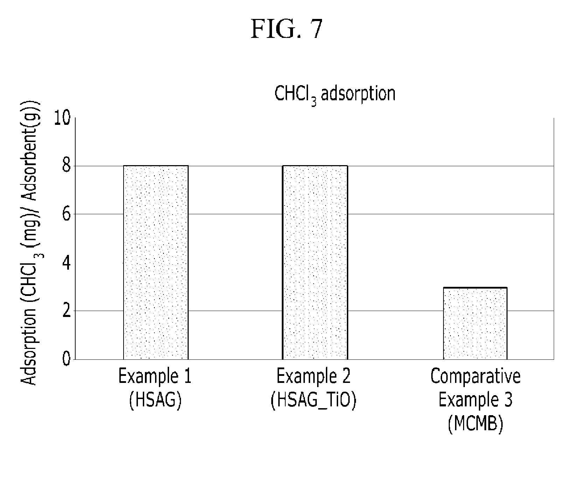

About 0.025 g of each organic material adsorbent is mixed with about 50 ml of a CHCl₃ aqueous solution of about 20 ppm concentration. Subsequently, the mixture is agitated overnight. Subsequently, it is filtered using a polypropylene syringe filter and washed. Subsequently, the amount of CHCl₃ remaining in the solution is measured, and the result is converted to calculate the amount of CHCl₃ adsorption of each organic material adsorbent. The results of Example 1, Example 2, and Comparative Example 3 are shown in FIG. 7.

As shown in FIG. 7, it is confirmed that the organic material adsorbents of Example 1 and Example 2 adsorb about 8 mg of CHCl₃ per about 1 g of carbon, while the organic material adsorbent of Comparative Example 3 adsorbs only about 3 mg of CHCl₃ per about 1 g of carbon. Thereby, it is confirmed that the organic material adsorbents of Example 1 and Example 2 may more effectively adsorb CHCl₃ than the organic material adsorbent of Comparative Example 3.

While this disclosure has been described in connection with various example embodiments, it is to be understood that the application is not limited to the disclosed embodiments. On the contrary, it should be understood that the application will cover various modifications and equivalent arrangements included within the scope of the appended claims.

## Claims

1. A water purifying filter comprising:
an organic material adsorbent including graphite having a structure formed of carbon atoms organized in planes and a c-axis perpendicular to the planes, an interplanar spacing between adjacent planes at the c-axis being about 0.3354 nm to about 0.34 nm as measured by X-ray diffraction analysis (CuKα).

2. The water purifying filter of claim 1, wherein the graphite has a specific surface area of about 100 m²/g to about 900 m²/g.

3. The water purifying filter of claim 1 or 2, wherein the graphite has pores with an average diameter of about 0.1 nm to about 10 nm.

4. The water purifying filter of any of claims 1-3, wherein the graphite has a porosity of about 0.05 cm³/g to about 1 cm³/g.

5. The water purifying filter of any of claims 1-4, further comprising:
a coating layer on a surface of the graphite, the coating layer including an anti-oxidant material.

6. The water purifying filter of claim 5, wherein the anti-oxidant material comprises an oxide of a Group 4 element, an oxide of a Group 8 element, an oxide of a Group 13 element, an oxide of a Group 14 element, a carbide of a Group 4 element, a carbide of a Group 6 element, a zeolite, or a combination thereof.

7. The water purifying filter of claim 5, wherein the anti-oxidant material comprises TiO₂, Fe₂O₃, Al₂O₃, SiO₂, WC, TiC, or a combination thereof.

8. The water purifying filter of any of claims 5-7, wherein the coating layer covers a part of or the entire surface of the graphite.

9. The water purifying filter of any of claims 5-8, wherein the anti-oxidant material is present in an amount of about 1 wt% to about 30 wt%, based on a total weight of the organic material adsorbent.

10. A water purifying system comprising the water purifying filter of any of claims 1-9.
